# EUROPEAN PATENT APPLICATION

(11) **EP 2 709 311 A1**
(43) Date of publication of application: **19.03.2014**
(21) Application number: 12803985.6
(22) Date of filing: 25.06.2012
(51) Int. Cl.: H04L 12/24

(54) **METHOD, DEVICE AND SYSTEM FOR EQUIPMENT MANAGEMENT**

(30) Priority: 27.06.2011 CN 201110175351
(71) Applicant: Huawei Device Co., Ltd., Shenzhen, Guangdong 518129 (CN)
(72) Inventor: ZHONG, Zhen, Shenzhen Guangdong 518129 (CN)
(74) Representative: Pfenning, Meinig & Partner GbR
(86) International application number: PCT/CN2012/077435
(87) International publication number: WO 2013/000383

(57) **Abstract**

The present invention relates to the field of communications, and discloses a device management method, apparatus and system, which improve communication efficiency between devices in a system and reduce complexity of device maintenance. The method of the present invention includes: when a device information sending condition is satisfied, sending device information of a client to a server, so that the server sends a management instruction to the client according to the received device information; receiving the management instruction sent by the server; executing a parameter operation according to a parameter acquisition instruction or a parameter update instruction in the management instruction; generating a management instruction response message, where the management instruction response message carries an execution result obtained after the parameter operation is executed; and sending the management instruction response message to the server. Embodiments of the present invention are mainly applied in network architecture formed by a server and a client.

## Description

This application claims priority to Chinese Patent Application No. 201110175351.2, filed with the Chinese Patent Office on June 27, 2011, and entitled "DEVICE MANAGEMENT METHOD, APPARATUS AND SYSTEM", which is incorporated herein by reference in its entirety.

### TECHNICAL FIELD

The present invention relates to the field of communications, and in particular, to a device management method, apparatus and system.

### BACKGROUND

With the development of communications technologies, higher and higher requirements are imposed on management of a terminal device in a network system. Currently, an OMA-DM (Open Mobile Alliance-Device Management) standard is frequently used to implement management of a mobile terminal device; and management of a fixed network terminal device is implemented according to a TR-069 standard.

In a process of implementing embodiments of the present invention, the inventor finds that: In the OMA-DM and TR-069 standards, a large amount of command formats and complicated device management execution flows are defined, so as to be applied to different application scenarios and communication services. However, in actual development, for a simple network system or communication service, a large amount of command formats and complicated device management execution flows result in overcomplicated steps when a server and a client perform interaction and communication, thereby reducing communication efficiency between devices in the system when device management is performed; moreover, after the development is completed, subsequent device maintenance is also very complicated.

### SUMMARY

Embodiments of the present invention provide a device management method, apparatus and system, which can improve communication efficiency between devices in a system and reducing complexity of device maintenance.

In order to achieve the foregoing objectives, the embodiments of the present invention adopt the following technical solutions:

In one aspect, an embodiment of the present invention provides a device management method, including:
when a device information sending condition is satisfied, sending device information of a client to a server, so that after finding, through searching, according to pre-configured correspondence between device information and a management instruction, a management instruction corresponding to the device information, the server sends the management instruction to the client, where the device information sending condition includes: a preset time interval expires, a management notification sent by the server is received, and an emergency meeting a preset emergency alarm condition occurs on the client;
receiving the management instruction sent by the server, where the management instruction includes a parameter acquisition instruction or a parameter update instruction;
executing a parameter operation according to the parameter acquisition instruction or the parameter update instruction in the management instruction;
generating a management instruction response message, where the management instruction response message carries an execution result obtained after the parameter operation is executed; and
sending the management instruction response message to the server.

In one aspect, an embodiment of the present invention further provides a device management method, including:
receiving device information of a client sent by the client when a device information sending condition is satisfied;
finding, through searching, according to pre-configured correspondence between device information and a management instruction, a management instruction corresponding to the device information;
sending the management instruction to the client, so that after executing a parameter operation according to the management instruction, the client returns a management instruction response message to the server; and
receiving the management instruction response message returned by the client.

In one aspect, an embodiment of the present invention provides a device management apparatus, including:
a device information sending unit, configured to: when a device information sending condition is satisfied, send device information of a client to a server, so that after finding, through searching, according to pre-configured correspondence between device information and a management instruction, a management instruction corresponding to the device information, the server sends the management instruction to the client, where the device information sending condition includes: a preset time interval expires, a management notification sent by the server is received, and an emergency meeting a preset emergency alarm condition occurs on the client;
a management instruction receiving unit, configured to receive the management instruction sent by the server, where the management instruction includes a parameter acquisition instruction or a parameter update instruction;
a parameter operation executing unit, configured to execute a parameter operation according to the parameter acquisition instruction or the parameter update instruction in the management instruction;
an instruction response generating unit, configured to generate a management instruction response message, where the management instruction response message carries an execution result obtained after the parameter operation is executed; and
an instruction response sending unit, configured to send the management instruction response message to the server.

In another aspect, an embodiment of the present invention further provides a device management apparatus, including:
a device information receiving unit, configured to receive device information of a client sent by the client when a device information sending condition is satisfied;
a management instruction searching unit, configured to find, through searching, according to pre-configured correspondence between device information and a management instruction, a management instruction corresponding to the device information;
a management instruction sending unit, configured to send the management instruction to the client, so that after executing a parameter operation according to the management instruction, the client returns a management instruction response message to the server; and
an instruction response receiving unit, configured to receive the management instruction response message returned by the client.

In still another aspect, an embodiment of the present invention further provides a device management system, including:
a client, configured to: when a device information sending condition is satisfied, send device information of the client to a server, and receive a management instruction sent by the server; and
the server, configured to receive the device information of the client, find, through searching, according to pre-configured correspondence between device information and a management instruction, a management instruction corresponding to the device information, and send the management instruction to the client, where
the client is further configured to execute a parameter operation according to a parameter acquisition instruction or a parameter update instruction in the management instruction, and generate a management instruction response message after executing the parameter operation, where the management instruction response message carries an execution result obtained after the parameter operation is executed; and the client is further configured to send the management instruction response message to the server.

According to the device management method, apparatus and system provided in the embodiments of the present invention, after receiving device information sent by a client, a server sends a management instruction to the client, so that the client executes a corresponding operation according to the management instruction, and returns a management instruction response message to the server; compared with the prior art, in the embodiments of the present invention, commands and flows of device management are simplified, communication efficiency between devices in a system is improved, and complexity of device maintenance is reduced.

### BRIEF DESCRIPTION OF DRAWINGS

FIG. 1 is a flow chart of a device management method according to Embodiment 1 of the present invention;
FIG. 2 is a flow chart of another device management method according to Embodiment 1 of the present invention;
FIG. 3 is a block diagram of a device management apparatus according to Embodiment 1 of the present invention;
FIG. 4 is a block diagram of another device management apparatus according to Embodiment 1 of the present invention;
FIG. 5 is a flow chart of a device management method according to Embodiment 2 of the present invention;
FIG. 6 is a flow chart of a device management method according to Embodiment 3 of the present invention;
FIG. 7 is a flow chart of a device management method according to Embodiment 4 of the present invention;
FIG. 8 is a block diagram of a device management apparatus according to Embodiment 5 of the present invention;
FIG. 9 is a block diagram of another device management apparatus according to Embodiment 5 of the present invention;
FIG. 10 is a schematic diagram of a device management system according to Embodiment 6 of the present invention; and
FIG. 11 is a flow chart of information interaction for device management between a client and a server according to Embodiment 6 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

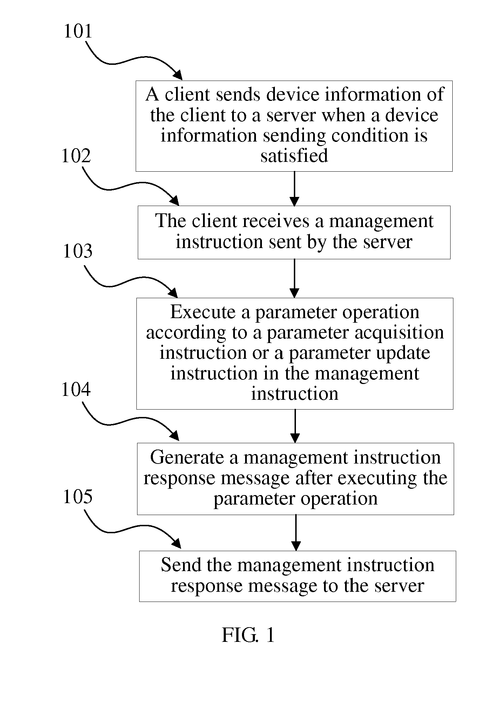

Embodiment 1 of the present invention provides a device management method, where the method is a method of a client side. As shown in FIG. 1, the method includes the following steps:

101: A client sends device information of the client to a server when a device information sending condition is satisfied.

The device information sending condition includes: a preset time interval expires, a management notification sent by the server is received, and an emergency meeting a preset emergency alarm condition occurs on the client. By sending the device information of the client to the server, the client sends the server the device information such as a device identifier of the client, a software version, and software issue time, so that after finding, through searching, according to pre-configured correspondence between device information and a management instruction, a management instruction corresponding to the device information, the server sends the management instruction to the client.

For example, in a system formed by multiple personal computers and a server computer, each personal computer sends its device information to the server computer at a time interval (for example, a time interval of 2 seconds) preset in the system. A device identifier in the device information may be a mainboard number of a personal computer, and is used to uniquely identify a personal computer.

102: The client receives the management instruction sent by the server.

After receiving the device information sent by the client, the server sends the corresponding management instruction to the client according to the device information, where the management instruction includes a parameter acquisition instruction or a parameter update instruction.

103: Execute a parameter operation according to the parameter acquisition instruction or the parameter update instruction in the management instruction.

104: Generate a management instruction response message after executing the parameter operation.

The management instruction response message carries an execution result obtained after the parameter operation is executed.

105: Send the management instruction response message to the server.

The client executes a corresponding parameter operation according to the parameter acquisition instruction or the parameter update instruction, and sends an instruction response message to the server after completing the parameter operation, so as to notify the server of a result of this parameter operation.

In an actual application, step 102 to step 105 may be executed successively for multiple times. For a management instruction sent by the server each time, the client executes a corresponding parameter operation, generates an instruction response message and sends the instruction response message to the server.

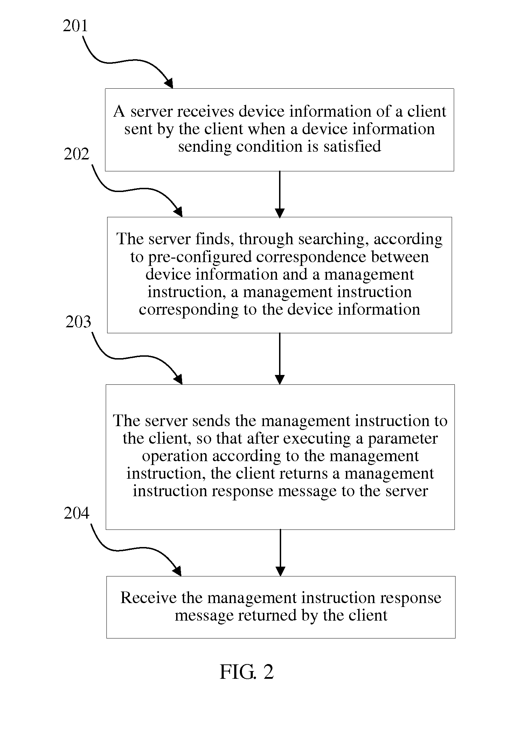

An embodiment of the present invention further provides another device management method, where the method is a method of a server side. As shown in FIG. 2, the method includes the following steps:

201: A server receives device information of a client sent by the client when a device information sending condition is satisfied.

202: The server finds, through searching, according to pre-configured correspondence between device information and a management instruction, a management instruction corresponding to the device information.

The correspondence between device information and a management instruction may be manually established and stored in the server. For example, the correspondence between device information and a management instruction is established in a database table. After receiving the device information of the client, the server finds, through searching, by indexing data items of the database table, a management instruction corresponding to the device information.

203: The server sends the management instruction to the client, so that after executing a parameter operation according to the management instruction, the client returns a management instruction response message to the server.

The management instruction sent by the server to the client includes a parameter acquisition instruction or a parameter update instruction.

204: Receive the management instruction response message returned by the client.

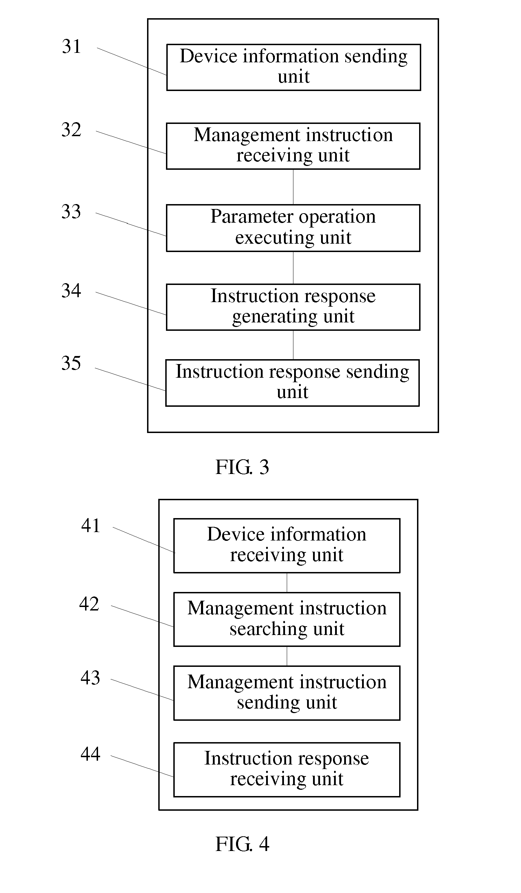

An embodiment of the present invention further provides a device management apparatus, where the apparatus may be disposed in a client. As shown in FIG. 3, the apparatus includes: a device information sending unit 31, a management instruction receiving unit 32, a parameter operation executing unit 33, an instruction response generating unit 34, and an instruction response sending unit 35.

The device information sending unit 31 is configured to: when a device information sending condition is satisfied, send device information of a client to a server, so that after finding, through searching, according to pre-configured correspondence between device information and a management instruction, a management instruction corresponding to the device information, the server sends the management instruction to the client.

The management instruction receiving unit 32 is configured to receive the management instruction sent by the server, where the management instruction includes a parameter acquisition instruction or a parameter update instruction.

The parameter operation executing unit 33 is configured to execute a parameter operation according to the parameter acquisition instruction or the parameter update instruction in the management instruction.

The instruction response generating unit 34 is configured to generate a management instruction response message, where the management instruction response message carries an execution result obtained after the parameter operation is executed.

The instruction response sending unit 35 is configured to send the management instruction response message to the server.

In addition, the present invention further provides a device management apparatus, where the apparatus may be disposed in a server. As shown in FIG. 4, the apparatus includes: a device information receiving unit 41, a management instruction searching unit 42, a management instruction sending unit 43, and an instruction response receiving unit 44.

The device information receiving unit 41 is configured to receive device information of a client sent by the client when a device information sending condition is satisfied.

The management instruction searching unit 42 is configured to find, through searching, according to pre-configured correspondence between device information and a management instruction, a management instruction corresponding to the device information.

The management instruction sending unit 43 is configured to send the management instruction to the client according to the received device information, so that after executing a parameter operation according to the management instruction, the client returns a management instruction response message to the server.

The instruction response receiving unit 44 is configured to receive the management instruction response message returned by the client.

According to the device management method and apparatus provided in the embodiment of the present invention, after receiving device information sent by a client, a server sends a management instruction to the client, so that the client executes a corresponding operation according to the management instruction, and returns a management instruction response message to the server; compared with the prior art, in the embodiment of the present invention, commands and flows of device management are simplified, communication efficiency between system devices is improved, and complexity of device maintenance is reduced.

### Embodiment 2

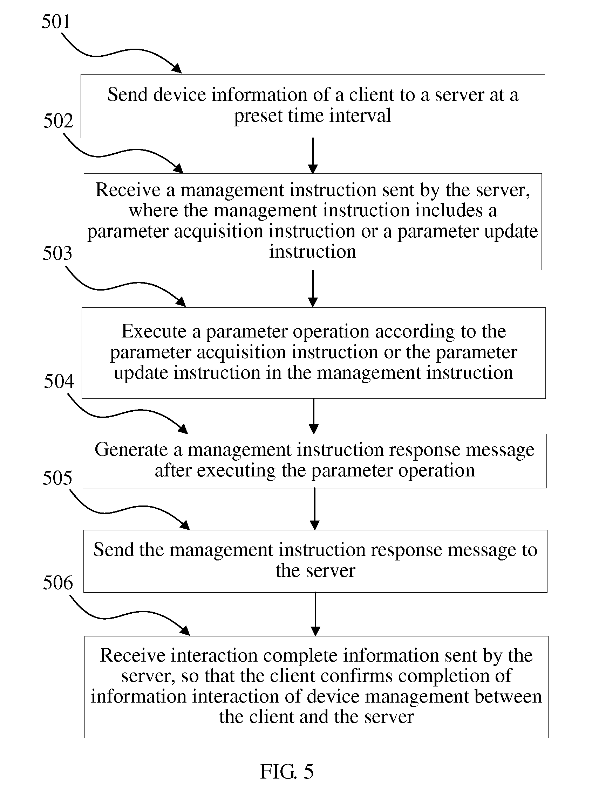

A device information sending condition of a client includes: a preset time interval expires, a management notification sent by a server is received, and an emergency meeting a preset emergency alarm condition occurs on the client. When the device information sending condition is that a preset time interval expires, an embodiment of the present invention provides a device management method, where as shown in FIG. 5, the method includes the following steps:

501: Send device information of a client to a server at a preset time interval.

The device information of the client sent by the client to the server includes information such as a device identifier of the client, a software version, and software issue time.

502: Receive a management instruction sent by the server, where the management instruction includes a parameter acquisition instruction or a parameter update instruction.

After receiving the device information sent by the client, the server finds, through searching, according to pre-configured correspondence between device information and a management instruction, a management instruction corresponding to the device information, and sends the corresponding management instruction to the client. In an actual application, when the server finds, through searching, the management instruction corresponding to the device information, the server may return a receive success response message to the client, where the receive success response message may include the management instruction and is returned to the client. When the server does not find, through searching, the management instruction corresponding to the device information, the server returns a receive failure response message to the client, so as to notify the client to end a current interaction flow of device management between the client and the server. In the foregoing embodiment, the management instruction includes, but is not limited to, the listed information.

As an actual application scenario, the management instruction sent by the server to the client after the device information is received includes a device information confirming instruction, and no parameter acquisition instruction or parameter update instruction is sent to the client. In this case, the device management method provided in the embodiment of the present invention may be simplified into step K01 and step K02:

K01: Send device information of a client to a server at a preset time interval.

K02: Receive a device information confirming instruction returned by the server after the device information is received.

By executing step K01 and step K02 periodically, the server and the client can confirm that they are in a connected state with each other.

503: Execute a parameter operation according to the parameter acquisition instruction or the parameter update instruction in the management instruction.

The management instruction includes the parameter acquisition instruction and/or the parameter update instruction. If the client receives the parameter acquisition instruction in the management instruction, search the client according to the parameter acquisition instruction to find a parameter required by the parameter acquisition instruction. If the client receives the parameter update instruction, a parameter value carried in the parameter update instruction needs to be updated to the client.

504: Generate a management instruction response message after executing the parameter operation.

In one aspect, after completing parameter acquisition, the client generates a management instruction response message, where the management instruction response message includes the parameter found through searching. In another aspect, after completing parameter update, the client also generates a management instruction response message, where the management instruction response message generated after parameter update is completed includes an update result recording an update success/failure situation.

505: Send the management instruction response message to the server.

Step 503 to step 505 are described through an example. If the parameter acquisition instruction carries an acquisition instruction of a software version of software A running on the client, the client finds, through searching, the software version of the software A running on the client, generates the management instruction response message, and includes information of the software version in the generated management instruction response message, and the client sends the server the management instruction response message including the information of the software version. In another case, if the parameter update instruction carries an update value of a configuration parameter A in the client, after receiving the parameter update instruction, the client takes the update value of the configuration parameter A from the parameter update instruction, and replaces a current value of the configuration parameter A in the client with the update value. If the replacement is successful, the management instruction response message is generated, and information of replacement success is included in the generated management instruction response message, and the client sends the server the management instruction response message including the information of replacement success; if the replacement fails, information of replacement failure is carried in the generated management instruction response message, and the client sends the server the management instruction response message including the information of replacement failure.

In an actual application, after step 501 is executed, the server sends different management instructions according to different contents of the received device information; for a different management instruction sent by the server each time, the client executes a parameter operation and sends a management instruction response message to the server, which is described in the following by taking step S01 to step S06 as an example.

S01: The client receives the management instruction sent by the server.

The management instruction includes a parameter acquisition instruction, and the parameter acquisition instruction requires to acquire a software version number of software A running on the client.

S02: The client acquires the software version number of the software A running on the client, generates a management instruction response message, and carries the software version number of the software A in the generated management instruction response message.

S03: Send the management instruction response message to the server.

S04: After receiving the management instruction response message carrying the software version number of the software A, the client receives the server sends another management instruction to the client.

The another management instruction includes another parameter acquisition instruction, and the another parameter acquisition instruction requires to acquire a software version of software B running on the client.

S05: The client acquires the software version of the software B running on the client, generates another management instruction response message, and carries the software version number of the software B in the another generated management instruction response message.

S06: Send the management instruction response message carrying the software version number of the software B to the server.

506: Receive interaction complete information sent by the server, so that the client confirms completion of information interaction of device management between the client and the server.

The server sends the interaction complete information to the client, so as to notify the client that a current information interaction flow of device management ends. After receiving the interaction complete information, the client disconnects a connection between the client and the server, so as to avoid occupying a connection resource of the server. When the client initiates access to the server once again after a predetermined time interval, that is, when the client sends the device information of the client to the server once again, a new device management flow starts, and steps 501 to 506 are repeated.

Further, current networks commonly support HTTP (HyperText Transfer Protocol, hypertext transfer protocol), so in the embodiment of the present invention, interaction between the client and the server described in the foregoing may be performed through HTTP, thereby implementing the device management method provided in the embodiment of the present invention. Optionally, in order to enhance security of information interaction on a network, HTTPS (HyperText Transfer Protocol over Secure Socket Layer) may be used to perform interaction between the client and the server.

In addition, as an applicable implementation manner, an XML (Extensible Markup Language, extensible markup language) may be used as a standard to design a format of information transmitted between the client and the server. For example, in this embodiment, the device information sent by the client to the server may be designed in the following format according to the XML:

```
          <?xml version="1.0" encoding="utf-8"?>
          <Client version="1.0">
             <Request command="INFORM">
               <!-- Self-defined parameter, such as a device identifier or a software version
               number -->
             </Request>
          </Client>
```

The parameter acquisition instruction in the management instruction may be designed as follows according to the XML:

```
          <?xml version="1.0" encoding="utf-8"?>
          <Client version="1.0">
             <Request command="GET">
               <!-- Self-defined parameter, which may require to read a
parameter of the client -->
             </Request>
          </Client>
```

The management instruction response message corresponding to the parameter acquisition instruction may be designed as follows according to the XML:

```
          <?xml version="1.0" encoding="utf-8"?>
          <Client version="1.0">
             <Request command="GET">
               <!-- Self-defined parameter, which is a response to the parameter acquisition
               instruction of the server, and is used to report
 a corresponding parameter in the client -->
             </Response>
          </Client>
```

The parameter update instruction in the management instruction may be designed as follows according to the XML:

```
          <?xml version="1.0" encoding="utf-8"?>
          <Server version="1.0">
             <Request command=" SET">
               <!-- Self-defined parameter, which may require to set
 a parameter of the client -->
             </Request>
          </Server>
```

The management instruction response message corresponding to the parameter update instruction may be designed as follows according to the XML:

```
          <?xml version="1.0" encoding="utf-8"?>
          <Client version="1.0">
             <Response command="SET">
               <!-- Self-defined parameter, which is a response to
 the parameter update instruction
               of the server, and may be a success response or a failure response-->
             </Response>
          </Client>
```

The interaction complete information may be designed as follows according to the XML:

```
          <?xml version="1.0" encoding="utf-8"?>
          <Server version="1.0">
             <!-- No information interaction any more, and this interaction ends -->
          </Server>
```

According to the foregoing related description of the XML, an operation corresponding to the parameter acquisition instruction is "GET", that is, acquiring a parameter from the client; and an operation corresponding to the parameter update instruction is "SET", that is, updating a parameter value to the client. A device management action of the server to the client may be completed through the parameter acquisition instruction, the parameter update instruction, and a combination of the two, instructions and flow setting are simple, and no complex implementation solution is required. For example, when performing remote diagnosis on the client, the server first queries a parameter state of the client through the parameter acquisition instruction, and if the parameter state of the client is abnormal, the server updates a correct parameter value to the client through the parameter update instruction. For another example, the device information sent by the client to the server carries a current software version of the client, and if it is detected by the server that the current software version has expired, the server sends latest version software to the client through the parameter update instruction. Then, after updating the latest version software, the client returns a management instruction response message to the server, so as to notify the server that software version update is successful. After receiving the management instruction response message, the server sends interaction complete information to the client, and this management interaction flow ends. It should be noted that, when a data amount of the latest version software is small, the latest version software may be sent directly through the parameter update instruction; if the data amount is large, a software download address may be sent to the client through the parameter update instruction, so that the client performs software version update from the software download address.

In a device management system provided in the embodiment of the present invention, the client may be a mobile network client and may also be a fixed network client, which is not limited in the embodiment of the present invention.

According to the device management method provided in the embodiment of the present invention, after receiving device information sent by a client, a server sends a management instruction to the client, so that the client executes a corresponding operation according to the management instruction, and returns a management instruction response message to the server; compared with the prior art, commands and flows of device management are simplified, communication efficiency between devices in a system is improved, and complexity of device maintenance is reduced.

Moreover, HTTP that is commonly supported by the current networks may be used for information interaction, and the XML that is widely used may be adopted to design the instructions in the device management, so that development is simple and convenient, and large-scale application is facilitated.

In addition, the device management method provided in the embodiment of the present invention may be applied in a mobile network client and may also be applied in a fixed network client, and the instructions and interaction flows involved in the device management system provided in the embodiment of the present invention are independent of network architecture of an operator, and have a small association coupling degree with a network of the operator, so that configuration and deployment are performed more easily.

### Embodiment 3

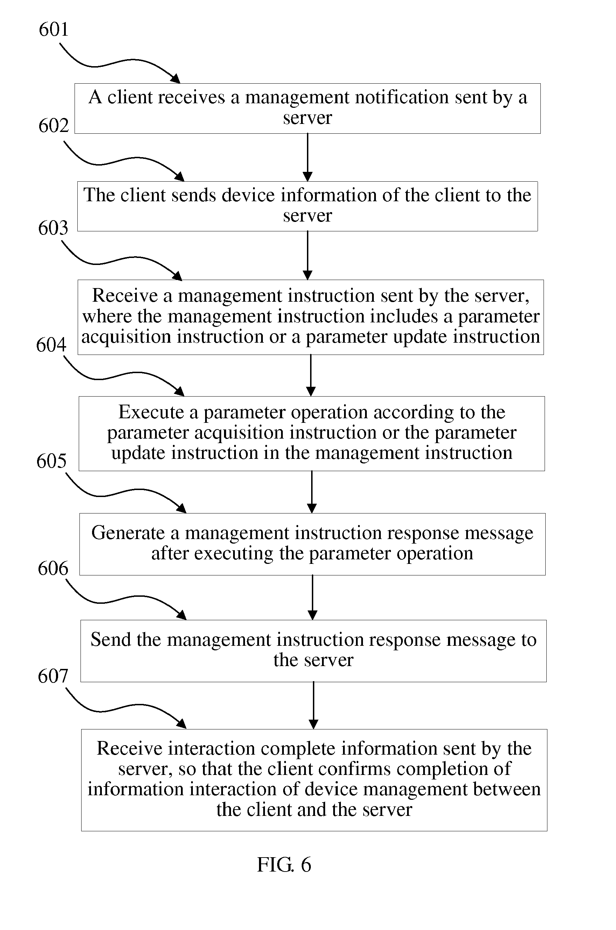

A device information sending condition of a client includes: a preset time interval expires, a management notification sent by a server is received, and an emergency meeting a preset emergency alarm condition occurs on the client. If the device information sending condition is that a management notification sent by a server is received, an embodiment of the present invention provides a device management method, where as shown in FIG. 6, the method includes the following steps:

601: A client receives a management notification sent by a server.

The management notification may be sent from the server through a manual command, and is used to enable the client to return device information in real time after the management notification is received.

602: The client sends device information of the client to the server.

The device information of the client sent by the client to the server includes information such as a device identifier of the client, a software version, and software issue time. The device information of the client is sent, so that after finding, through searching, according to pre-configured correspondence between device information and a management instruction, a management instruction corresponding to the device information, the server sends the management instruction to the client.

603: Receive the management instruction sent by the server, where the management instruction includes a parameter acquisition instruction or a parameter update instruction.

604: Execute a parameter operation according to the parameter acquisition instruction or the parameter update instruction in the management instruction.

The management instruction includes the parameter acquisition instruction and/or the parameter update instruction. If the client receives the parameter acquisition instruction in the management instruction, search the client according to the parameter acquisition instruction to find a parameter required by the parameter acquisition instruction. If the client receives the parameter update instruction, a parameter value carried in the parameter update instruction needs to be updated to the client.

605: Generate a management instruction response message after executing the parameter operation.

In one aspect, after completing parameter acquisition, the client generates a management instruction response message, where the management instruction response message includes the parameter found through searching. In another aspect, after completing parameter update, the client also generates a management instruction response message, where the management instruction response message generated after parameter update is completed includes an update result recording an update success/failure situation.

606: Send the management instruction response message to the server.

607: Receive interaction complete information sent by the server, so that the client confirms completion of information interaction of device management between the client and the server.

In the device management method provided in the embodiment of the present invention, the information interaction of device management between the client and the server is executed through HTTP. Optionally, in order to enhance security of information interaction on a network, HTTPS may be used to perform information interaction of device management between the client and the server.

In addition, as an applicable implementation manner, an XML (Extensible Markup Language, extensible markup language) may be used as a standard to design a format of information transmitted between the client and the server. For specific description, reference may be made to relevant description in the embodiment of the present invention, and details are not repeatedly described in this embodiment.

In a device management system provided in the embodiment of the present invention, the client may be a mobile network client and may also be a fixed network client, which is not limited in the embodiment of the present invention.

According to the device management method provided in the embodiment of the present invention, after receiving device information sent by a client, a server sends a management instruction to the client, so that the client executes a corresponding operation according to the management instruction, and returns a management instruction response message to the server; compared with the prior art, commands and flows of device management are simplified, communication efficiency between devices in a system is improved, and complexity of device maintenance is reduced. Meanwhile, in the embodiment of the present invention, a subsequent operation may be triggered by using the management notification sent by the server, thereby having strong flexibility.

Moreover, HTTP that is commonly supported by current networks may be used for information interaction, and the XML that is widely used may be adopted to design the instructions in the device management, so that development is simple and convenient, and large-scale application is facilitated.

In addition, the device management method provided in the embodiment of the present invention may be applied in a mobile network client and may also be applied in a fixed network client, and the instructions and interaction flows involved in the device management system provided in the embodiment of the present invention are independent of network architecture of an operator, and have a small association coupling degree with a network of the operator, so that configuration and deployment are performed more easily.

### Embodiment 4

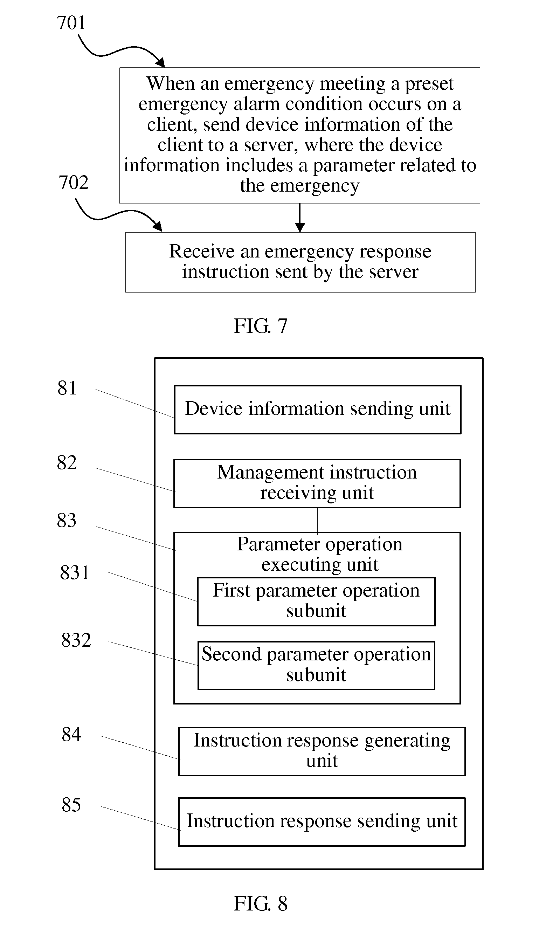

When an emergency meeting a preset emergency alarm condition occurs on a client, an embodiment of the present invention further provides a device management method, where as shown in FIG. 7, the method includes the following steps:

701: When an emergency meeting a preset emergency alarm condition occurs on a client, send device information of the client to a server, where the device information includes a parameter related to the emergency.

702: Receive an emergency response instruction sent by the server.

When an emergency occurs on the client, the device information sent by the client to the server includes the parameter related to the emergency, so as to notify the emergency. When receiving temporary device information, the server returns the emergency response instruction to the client. Generally, presetting may be performed on the client, so that when the emergency occurs, the client can send the parameter related to the emergency. Correspondingly, an emergency response instruction corresponding to the emergency may be preset on the server.

For example, when a power supply of the client is abnormal, the device information sent by the client to the server includes a parameter related to power supply abnormality, so as to notify a power supply abnormal situation of the client. The server returns a corresponding emergency response instruction to the client according to the received parameter related to power supply abnormality. The emergency response instruction may be confirmation information, which is used to notify the client that the emergency of power supply abnormality of the client has been recorded in the server.

In the device management method provided in the embodiment of the present invention, information interaction of device management between the client and the server is executed through HTTP. Optionally, in order to enhance security of information interaction on a network, HTTPS may be used to perform information interaction of device management between the client and the server.

In addition, as an applicable implementation manner, an XML (Extensible Markup Language, extensible markup language) may be used as a standard to design a format of information transmitted between the client and the server. For specific description, reference may be made to relevant description in the embodiment of the present invention, and details are not repeatedly described in this embodiment.

In a device management system provided in the embodiment of the present invention, the client may be a mobile network client and may also be a fixed network client, which is not limited in the embodiment of the present invention.

In the device management method provided in the embodiment of the present invention, after receiving and recording the parameter related to the emergency sent by the client, the server returns the emergency response instruction to the client, thereby implementing reporting and recording of the emergency, which is convenient for subsequent repair.

Moreover, HTTP that is commonly supported by current networks may be used for information interaction, and the XML that is widely used may be adopted to design the instructions in the device management, so that development is simple and convenient, and large-scale application is facilitated.

In addition, the device management method provided in the embodiment of the present invention may be applied in a mobile network client and may also be applied in a fixed network client, and the instructions and interaction flows involved in the device management system provided in the embodiment of the present invention are independent of network architecture of an operator, and have a small association coupling degree with a network of the operator, so that configuration and deployment are performed more easily.

### Embodiment 5

An embodiment of the present invention provides a device management apparatus, where the apparatus may be disposed in a client. As shown in FIG. 8, the apparatus includes: a device information sending unit 81, a management instruction receiving unit 82, a parameter operation executing unit 83, an instruction response generating unit 84, and an instruction response sending unit 85.

The device information sending unit 81 is configured to: when a device information sending condition is satisfied, send device information of a client to a server, so that after finding, through searching, according to pre-configured correspondence between device information and a management instruction, a management instruction corresponding to the device information, the server sends the management instruction to the client.

The device information sending condition includes: a preset time interval expires, and a management notification sent by the server is received.

In addition, when an emergency meeting a preset emergency alarm condition occurs on the client, the device information of the client sent to the server further includes a parameter related to the emergency, so that the server returns an emergency response instruction.

The management instruction receiving unit 82 is configured to receive the management instruction sent by the server, where the management instruction includes a parameter acquisition instruction or a parameter update instruction.

The parameter operation executing unit 83 is configured to execute a parameter operation according to the parameter acquisition instruction or the parameter update instruction in the management instruction.

The instruction response generating unit 84 is configured to generate a management instruction response message, where the management instruction response message carries an execution result obtained after the parameter operation is executed.

The instruction response sending unit 85 is configured to send the management instruction response message to the server after the corresponding operation is executed.

Moreover, the management instruction receiving unit 82 is further configured to, after the management instruction response message is sent to the server, receive interaction complete information sent by the server, so that the client confirms completion of information interaction of device management between the client and the server.

As an actual application scenario, the management instruction sent by the server to the client after the device information is received includes a device information confirming instruction, and no parameter acquisition instruction or parameter update instruction is sent to the client. In this case, the device information sending unit 81 is further configured to send the device information of the client to the server at a preset time interval; the instruction response sending unit 85 is further configured to receive a device information confirming instruction returned by the server after the device information is received. In this application scenario, the server and the client can confirm that they are in a connected state with each other.

Further, the parameter operation executing unit 83 further includes: a first parameter operation subunit 831 and a second parameter operation subunit 832.

The first parameter operation subunit 831 is configured to: when the client receives the parameter acquisition instruction, acquire a parameter corresponding to the parameter acquisition instruction.

The second parameter operation subunit 832 is configured to: when the client receives the parameter update instruction, update a parameter value carried in the parameter update instruction to the client.

If an operation executed by the parameter operation executing unit 83 is acquiring a parameter corresponding to the parameter acquisition instruction, the management instruction response message generated by the instruction response generating unit 84 includes the parameter corresponding to the parameter acquisition instruction; and if the operation executed by the parameter operation executing unit 83 is updating a parameter value carried in the parameter update instruction to the client, the management instruction response message generated by the instruction response generating unit 84 includes an update result recording an update success/failure situation.

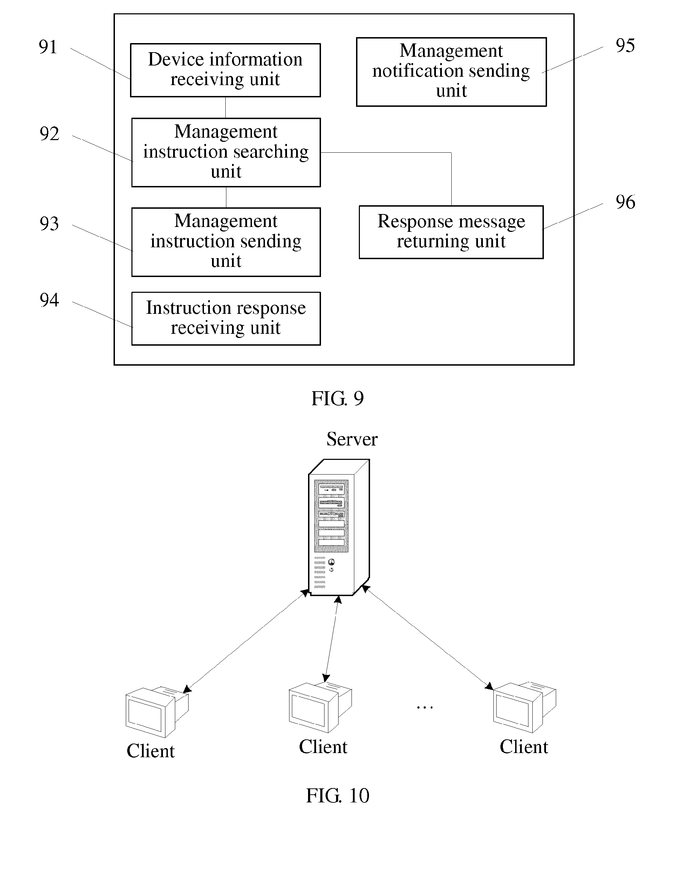

The embodiment of the present invention further provides another device management apparatus, where the apparatus may be disposed in a server. As shown in FIG. 9, the apparatus includes: a device information receiving unit 91, a management instruction searching unit 92, a management instruction sending unit 93, an instruction response receiving unit 94, a management notification sending unit 95, and a response message returning unit 96.

The device information receiving unit 91 is configured to receive device information of a client sent by the client at a preset time interval.

The management instruction searching unit 92 is configured to find, through searching, according to pre-configured correspondence between device information and a management instruction, a management instruction corresponding to the device information.

The management instruction sending unit 93 is configured to send the management instruction to the client according to the received device information, so that after executing a parameter operation according to the management instruction, the client returns a management instruction response message to the server.

The instruction response receiving unit 94 is configured to receive the management instruction response message returned by the client.

The management notification sending unit 95 is configured to send a management notification to the client before the device information of the client sent by the client at the preset time interval is received, so that after receiving the management notification, the client sends the device information to the server.

The response message returning unit 96 is configured to return a receive success response message to the client after the management instruction corresponding to the device information is found through searching; or return a receive failure response message to the client when the management instruction corresponding to the device information is not found through searching. The receive success response message may include the management instruction, so as to be returned to the client.

Further, in the device management apparatus provided in the embodiment of the present invention, information interaction of device management between the client and the server is executed through HTTP. Optionally, in order to enhance security of information interaction on a network, HTTPS may be used to perform information interaction of device management between the client and the server.

In addition, as an applicable implementation manner, an XML (Extensible Markup Language, extensible markup language) may be used as a standard to design a format of information transmitted between the client and the server. For specific description, reference may be made to relevant description in the embodiment of the present invention, and details are not repeatedly described in this embodiment.

According to the device management apparatus provided in the embodiment of the present invention, after receiving device information sent by a client, a server sends a management instruction to the client, so that the client executes a corresponding operation according to the management instruction, and returns a management instruction response message to the server; compared with the prior art, in the embodiment of the present invention, commands and flows of device management are simplified, communication efficiency between devices in a system is improved, and complexity of device maintenance is reduced. Moreover, HTTP that is commonly supported by networks may be used for information interaction, and an XML that is widely used may be adopted to design the instructions in the device management, so that development is simple and convenient, and large-scale application is facilitated.

### Embodiment 6

An embodiment of the present invention provides a device management system, where as shown in FIG. 10, the system includes a client and a server.

The client is configured to: when a device information sending condition is satisfied, send device information of a client to a server, and receive a management instruction sent by the server.

The server is configured to receive the device information of the client, find, through searching, according to pre-configured correspondence between device information and a management instruction, a management instruction corresponding to the device information, and send the management instruction to the client.

The client is further configured to execute a parameter operation according to a parameter acquisition instruction or a parameter update instruction in the management instruction, and generate a management instruction response message after executing the parameter operation, where the management instruction response message carries an execution result obtained after the parameter operation is executed; and the client is further configured to send the management instruction response message to the server.

The server is further configured to send interaction complete information to the client, where the interaction complete information is used to notify the client that information interaction of device management between the client and the server is completed.

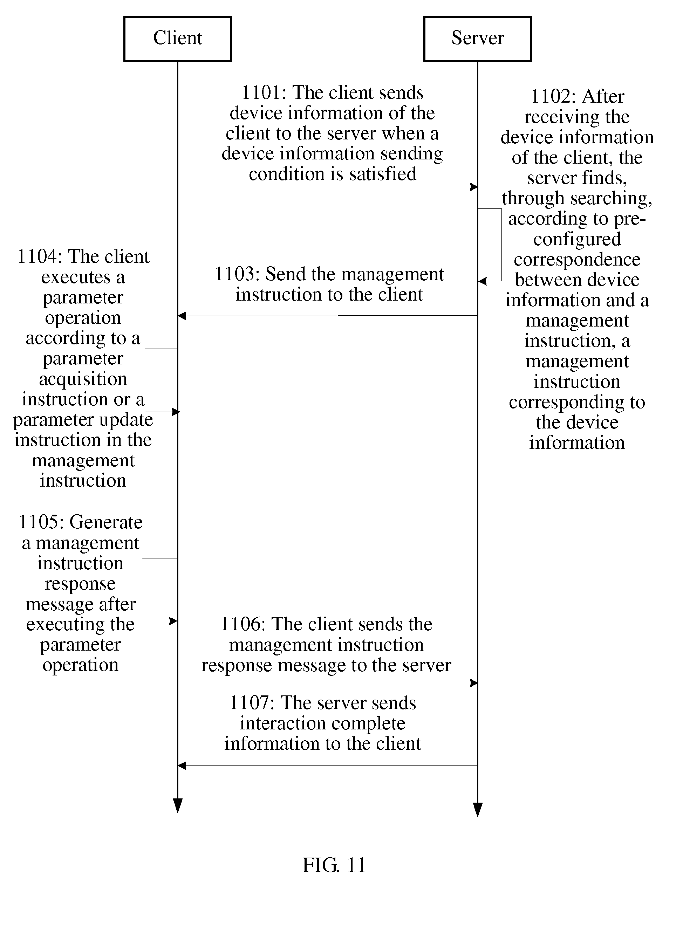

As shown in FIG. 11, in the device management system according to the embodiment of the present invention, an information interaction flow of device management between the client and the server is:

1101: The client sends device information of the client to the server when a device information sending condition is satisfied.

The device information sending condition includes: a preset time interval expires, and a management notification sent by the server is received.

1102: After receiving the device information of the client, the server finds, through searching, according to pre-configured correspondence between device information and a management instruction, a management instruction corresponding to the device information.

Optionally, after finding, through searching, the management instruction corresponding to the device information, the server returns a receive success response message to the client; or when not finding, through searching, the management instruction corresponding to the device information, the server returns a receive failure response message to the client. The receive success response message may include the management instruction.

1103: Send the management instruction to the client.

1104: The client executes a parameter operation according to a parameter acquisition instruction or a parameter update instruction in the management instruction.

The management instruction includes the parameter acquisition instruction and/or the parameter update instruction. If the client receives the parameter acquisition instruction in the management instruction, search the client according to the parameter acquisition instruction to find a parameter required by the parameter acquisition instruction. If the client receives the parameter update instruction, a parameter value carried in the parameter update instruction needs to be updated to the client.

1105: Generate a management instruction response message after executing the parameter operation.

In one aspect, after completing parameter acquisition, the client generates a management instruction response message, where the management instruction response message includes the parameter found through searching. In another aspect, after completing parameter update, the client also generates a management instruction response message, where the management instruction response message generated after parameter update is completed includes an update result recording an update success/failure situation.

1106: The client sends the management instruction response message to the server.

1107: The server sends interaction complete information to the client.

Moreover, if the device information sending condition is that a management notification sent by the server is received, after receiving the management notification sent by the server, the client sends the device information of the client to the server. For description of the management notification sent by the server, reference may be made to related description in Embodiment 3 of the present invention, and details are not repeatedly described herein.

In addition, when an emergency meeting a preset emergency alarm condition occurs on the client, the device information sent by the client includes a parameter related to the emergency, so as to notify the emergency. After receiving temporary device information, the server returns a emergency response instruction to the client. For description of an interaction flow of the emergency, reference may be made to related description in Embodiment 4 of the present invention, and details are not repeatedly described herein.

Further, the client and the server perform information interaction of device management through HTTP. Optionally, in order to enhance security of information interaction on a network, HTTPS may be used to perform information interaction of device management between the client and the server. In addition, an XML may also be used to design a format of information transmitted between the client and the server, and for specific description, reference may be made to the description in Embodiment 2 of the present invention, and details are not repeatedly described herein.

In a device management system provided in the embodiment of the present invention, the client may be a mobile network client and may also be a fixed network client, which is not limited in the embodiment of the present invention.

According to the device management system provided in the embodiment of the present invention, after receiving device information sent by a client, a server sends a management instruction to the client, so that the client executes a corresponding operation according to the management instruction, and returns a management instruction response message to the server; compared with the prior art, in the embodiment of the present invention, commands and flows of device management are simplified, communication efficiency between devices in the system is improved, and complexity of device maintenance is reduced.

Moreover, HTTP that is commonly supported by networks may be used for information interaction, and an XML that is widely used may be adopted to design the instructions in the device management, so that development is simple and convenient, and large-scale application is facilitated.

In addition, the instructions and interaction flows involved in the device management system provided in the embodiment of the present invention are independent of network architecture of an operator, and have a small association coupling degree with a network of the operator, so that configuration and deployment are performed more easily.

Through the foregoing description of the implementation manner, a person skilled in the art may clearly understand that the present invention may be implemented by software plus necessary universal hardware, and certainly, may also be implemented by hardware, but in many cases, the former is a preferred implementation manner. Based on such understanding, the technical solutions of the present invention essentially, or the part contributing to the prior art may be embodied in a form of a software product. The computer software product is stored in a readable storage medium, for example, a floppy disk, a hard disk, or an optical disk of a computer, and includes several instructions for instructing a computer device (which may be a personal computer, a server, or a network device, or the like) to perform the methods described in the embodiments of the present invention.

The foregoing description is merely specific implementation manners of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A device management method, comprising:
when a device information sending condition is satisfied, sending device information of a client to a server, so that after finding, through searching, according to pre-configured correspondence between device information and a management instruction, a management instruction corresponding to the device information, the server sends the management instruction to the client, wherein the device information sending condition comprises: a preset time interval expires, a management notification sent by the server is received, and an emergency meeting a preset emergency alarm condition occurs on the client;
receiving the management instruction sent by the server, wherein the management instruction comprises a parameter acquisition instruction or a parameter update instruction;
executing a parameter operation according to the parameter acquisition instruction or the parameter update instruction in the management instruction;
generating a management instruction response message, wherein the management instruction response message carries an execution result obtained after the parameter operation is executed; and
sending the management instruction response message to the server.

2. The method according to claim 1, wherein
when the client receives the parameter acquisition instruction, the executing a parameter operation specifically comprises: acquiring a parameter corresponding to the parameter acquisition instruction; and
when the client receives the parameter update instruction, the executing a parameter operation specifically comprises: updating a parameter value carried in the parameter update instruction to the client.

3. The method according to claim 1 or 2, wherein
if the executing a parameter operation comprises acquiring a parameter corresponding to the parameter acquisition instruction, the management instruction response message carries the acquired parameter corresponding to the parameter acquisition instruction; and
if the executing a parameter operation comprises updating a parameter value carried in the parameter update instruction to the client, the management instruction response message carries an update result obtained after the parameter value is updated.

4. The method according to claim 1, wherein after the sending the management instruction response message to the server, the method further comprises:
receiving interaction complete information sent by the server, wherein the interaction complete information is used to notify the client that information interaction of device management between the client and the server is completed.

5. The method according to claim 1, wherein when an emergency meeting a preset emergency alarm condition occurs on the client, the device information of the client sent to the server further comprises a parameter related to the emergency, so that the server returns an emergency response instruction.

6. The method according to claim 1, wherein the client and the server perform information interaction of device management through an HTTP hypertext transfer protocol.

7. A device management method, comprising:
receiving device information of a client sent by the client when a device information sending condition is satisfied;
finding, through searching, according to pre-configured correspondence between device information and a management instruction, a management instruction corresponding to the device information;
sending the management instruction to the client, so that after executing a parameter operation according to the management instruction, the client returns a management instruction response message to the server; and
receiving the management instruction response message returned by the client.

8. The method according to claim 7, further comprising:
returning a receive success response message to the client after finding, through searching, the management instruction corresponding to the device information; or
returning a receive failure response message to the client when not finding, through searching, the management instruction corresponding to the device information.

9. The method according to claim 7 or 8, wherein the receive success response message may comprise the management instruction.

10. The method according to claim 7, wherein before the receiving device information of a client sent by the client at a preset time interval, the method further comprises:
sending a management notification to the client, so that after receiving the management notification, the client sends the device information to the server.

11. A device management apparatus, comprising:
a device information sending unit, configured to: when a device information sending condition is satisfied, send device information of a client to a server, so that after finding, through searching, according to pre-configured correspondence between device information and a management instruction, a management instruction corresponding to the device information, the server sends the management instruction to the client, wherein the device information sending condition comprises: a preset time interval expires, a management notification sent by the server is received, and an emergency meeting a preset emergency alarm condition occurs on the client;
a management instruction receiving unit, configured to receive the management instruction sent by the server, wherein the management instruction comprises a parameter acquisition instruction or a parameter update instruction;
a parameter operation executing unit, configured to execute a parameter operation according to the parameter acquisition instruction or the parameter update instruction in the management instruction;
an instruction response generating unit, configured to generate a management instruction response message, wherein the management instruction response message carries an execution result obtained after the parameter operation is executed; and
an instruction response sending unit, configured to send the management instruction response message to the server.

12. The apparatus according to claim 11, wherein the parameter operation executing unit further comprises:
a first parameter operation subunit, configured to: when the client receives the parameter acquisition instruction, acquire a parameter corresponding to the parameter acquisition instruction; and
a second parameter operation subunit, configured to: when the client receives the parameter update instruction, update a parameter value carried in the parameter update instruction to the client.

13. The apparatus according to claim 11 or 12, wherein if the executing a parameter operation comprises acquiring a parameter corresponding to the parameter acquisition instruction, an execution result obtained after the parameter operation is executed is the acquired parameter corresponding to the parameter acquisition instruction; and
if the executing a parameter operation comprises updating a parameter value carried in the parameter update instruction to the client, an execution result obtained after the parameter operation is executed is an update result obtained after the update.

14. The apparatus according to claim 11, wherein the management instruction receiving unit is further configured to: after the management instruction response message is sent to the server, receive interaction complete information sent by the server, wherein the interaction complete information is used to notify the client that information interaction of device management between the client and the server is completed.

15. The apparatus according to claim 11, wherein when an emergency meeting a preset emergency alarm condition occurs on the client, the device information of the client sent to the server further comprises a parameter related to the emergency, so that the server returns an emergency response instruction.

16. The apparatus according to claim 11, wherein the client and the server perform information interaction of device management through an HTTP hypertext transfer protocol.

17. A device management apparatus, comprising:
a device information receiving unit, configured to receive device information of a client sent by the client when a device information sending condition is satisfied;
a management instruction searching unit, configured to find, through searching, according to pre-configured correspondence between device information and a management instruction, a management instruction corresponding to the device information;
a management instruction sending unit, configured to send the management instruction to the client according to the received device information, so that after executing a parameter operation according to the management instruction, the client returns a management instruction response message to the server; and
an instruction response receiving unit, configured to receive the management instruction response message returned by the client.

18. The apparatus according to claim 17, further comprising:
a response message returning unit, configured to return a receive success response message to the client after the management instruction corresponding to the device information is found through searching; or return a receive failure response message to the client when the management instruction corresponding to the device information is not found through searching.

19. The apparatus according to claim 17 or 18, wherein the receive success response message may comprise the management instruction.

20. The apparatus according to claim 17, further comprising:
a management notification sending unit, configured to send a management notification to the client, so that after receiving the management notification, the client sends the device information to the server.

21. A device management system, comprising:
a client, configured to: when a device information sending condition is satisfied, send device information of a client to a server, and receive a management instruction sent by the server;
the server, configured to receive the device information of the client, find, through searching, according to pre-configured correspondence between device information and a management instruction, a management instruction corresponding to the device information, and send the management instruction to the client, wherein
the client is further configured to execute a parameter operation according to a parameter acquisition instruction or a parameter update instruction in the management instruction, and generate a management instruction response message after executing the parameter operation, wherein the management instruction response message carries an execution result obtained after the parameter operation is executed; and the client is further configured to send the management instruction response message to the server.

22. The system according to claim 21, wherein the client is further configured to: when receiving the parameter acquisition instruction, acquire a parameter corresponding to the parameter acquisition instruction; and
the client is further configured to: when receiving the parameter update instruction, update a parameter value carried in the parameter update instruction to the client.

23. The system according to claim 21 or 22, wherein if the client acquires a parameter corresponding to the parameter acquisition instruction, the management instruction response message carries the acquired parameter corresponding to the parameter acquisition instruction; and
if the client updates a parameter value carried in the parameter update instruction to the client, the management instruction response message carries an update result obtained after the parameter value is updated.

24. The system according to claim 21, wherein when an emergency meeting a preset emergency alarm condition occurs on the client, the device information of the client sent to the server further comprises a parameter related to the emergency, so that the server returns an emergency response instruction.

25. The system according to claim 21, wherein the server is further configured to send interaction complete information to the client, wherein the interaction complete information is used to notify the client that information interaction of device management between the client and the server is completed.

26. The system according to claim 21, wherein the client and the server perform information interaction of device management through an HTTP hypertext transfer protocol.
